# EUROPÄISCHE PATENTSCHRIFT

(11) **EP 0 388 687 B1**
(45) Veröffentlichungstag und Bekanntmachung des Hinweises auf die Patenterteilung: **31.05.1995**
(21) Anmeldenummer: 90104090.7
(22) Anmeldetag: 02.03.1990
(51) Int. Cl.: H04L 12/28, H04B 3/54

(54) **Verfahren zum Austauschen von Daten**
Method of exchanging data
Méthode pour échanger des données

(30) Priorität: 21.03.1989 CH 1047/89
(43) Veröffentlichungstag der Anmeldung: 26.09.1990
(73) Patentinhaber: Datawatt BV, NL-8471 ZX Wolvega (NL)
(72) Erfinder: Braun, Walter, Dr., CH-5430 Wettingen (CH); Hagmann, Walter, Dr., CH-5034 Suhr (CH)
(74) Vertreter: Ottow, Jens M., Dr.

(56) Entgegenhaltungen:
- EP-A- 0 100 668
- EP-A- 0 231 457
- GB-A- 2 176 972
- GLOBAL TELECOMMUNICATIONS CONFERENCE 1987,15.-18.November 1987, Tokyo, JP, IEEE, (New York, US), Seiten 1415-1421; S.T. VUONG et al.: "DESIGN AND IMPLEMENTATION OF THE ACCESS AND LINK PROTOCOLS FOR A LOW-COST LAN USING ELECTRIC POWER LINES"
- 1985 NATIONAL AEROSPACE AND ELECTRONICS CONFERENCE,20.-24.Mai 1985 IEEE, (New York, US), Seiten 130-135; H.J. ALBER et al.: "A DUAL CHANNEL HIGH SPEED FIBER OPTICS MULTIPLEX DATA BUS SYSTEM"
- IBM TECHNICAL DISCLOSURE BULLETIN. vol. 24, no. 9, Februar 1982, NEW YORK US, Seiten 4828-4831; C.D. GRAVATTE et al.: "CHANNEL ACCESS VIA MULTIPLE LEVEL POLLING"

## Beschreibung

Die Erfindung betrifft ein Verfahren zum Austauschen von Daten in Form von Telegrammen in einem Netzwerk mit einer Masterstation, einer oder mehreren Teilnehmerstationen und einem gemeinsamen Datenkanal nach einem hierarchischen Token-Passing-Prinzip mit einer geregelt zugeteilten Sendeerlaubnis, bei welchem Verfahren
a) zu Beginn eines Datenaustausches die Sendeerlaubnis ausschliesslich bei der Masterstation liegt,
b) die Masterstation zum Auslösen des Datenaustausches ein Telegramm mit einem von ihr vorgegebenen Zeitlimit an die eine bzw. an wenigstens eine der mehreren Teilnehmerstationen als ersten Empfänger sendet,
c) die angesprochene Teilnehmerstation für einen durch das Zeitlimit beschränkten Zeitraum die Sendeerlaubnis übernimmt, und als Absender die Sendeerlaubnis mit einem Telegramm und einem das vorgegebene Zeitlimit nicht überschreitenden weiteren Zeitlimit ggf. an eine untergeordnete weitere Teilnehmerstation als zweiten Empfänger übergeben kann, welcher seinerseits dieselben Möglichkeiten hat wie der erste Empfänger, und
d) die Masterstation nach Ablauf des von ihr vorgegebenen Zeitlimits die Sendeerlaubnis wieder ausschliesslich übernimmt.

Ein solches Verfahren ist z.B. aus dem Artikel von H. J. Alber und W. A. Thomas, A DUAL CHANNEL HIGH SPEED FIBER OPTICS MULTIPLEX DATA BUS SYSTEM, Proc. IEEE 1985 National Aerospace and Electronics Conf. Neacon 1985, Vol.1, S.130-135, bekannt.

### Stand der Technik

Aus den veröffentlichten Patentanmeldungen EP-0,208,872, EP-0,231,457, EP-0,236,558 und EP-0,238,813 sind Signalübertragungsverfahren bekannt, welche sich speziell für die Datenübertragung auf den Leitungen eines Nieder- und/oder Mittelspannungsnetzes eignen. Sie zeichnen sich dadurch aus, dass sie an die zeit- und frequenzabhängigen Störeigenschaften des Uebertragungskanals angepasst sind, was in einer stark verbesserten Verfügbarkeit einzelner Datenverbindungen bei gleichzeitig kleiner Sendeleistung resultiert.

Für die Realisierung eines leittechnischen Systems auf Nieder- und Mittelspannungsnetzen wird aber neben einer möglichst störsicheren Signalübertragung zwischen einem einzelnen Sender und einem Empfänger auch ein Verfahren zur Regelung des Datenaustausches zwischen mehreren Teilnehmern benötigt. Dabei ist insbesondere der orts- und zeitabhängigen Uebertragungssicherheit des gemeinsamen Datenkanals Rechnung zu tragen.

Einen wichtigen Punkt stellt die Flexibilität des Systems dar. Es sollte möglich sein, das Netzwerk ohne grossen Aufwand erweitern zu können.

Auf der anderen Seite ist aus der eingangs genannten Druckschrift ein Datenübertragungssystem für sternförmige optische Datennetze in einem Kampfflugzeug bekannt, welches nach dem Token-Passing-Prinzip arbeitet, bei dem eine Masterstation zentral die Uebertragung steuert und nur für vorbestimmte Zeitabschnitte die Sendeerlaubnis und Weitergabemöglichkeit an untergeordnete Teilnehmerstationen abgeben kann. Die angesprochenen Teilnehmerstationen müssen dabei jedoch stets eine von 3 möglichen Nachrichten absetzen, so dass Spezialaufrufe, welche sich an alle Teilnehmer wenden und insbesondere zur Einbindung neuer Teilnehmer herangezogen werden, nicht ohne weiteres durchgeführt werden können. Hierdurch ergibt sich eine relativ geringe Flexibilität, die bei einem nichtveränderbaren System, wie es ein Flugzeug darstellt, nicht ins Gewicht fällt, beim Einsatz auf Versorgungsnetzen jedoch hinderlich ist.

### Darstellung der Erfindung

Aufgabe der Erfindung ist es, ein Verfahren der eingangs genannten Art dahingehend zu verbessern, dass ein zuverlässiger Datenaustausch über einen mit orts- und zeitabhängigen Störungen behafteten Datenkanal bei gleichzeitig grosser Flexibilität gewährleistet ist.

Die Aufgabe wird bei einem Verfahren der eingangs genannten Art dadurch gelöst, dass
e) jeder der Empfänger wahlweise auch das vorgegebene Zeitlimit verstreichen lassen kann, ohne die Sendeerlaubnis abzutreten, oder die Sendeerlaubnis an den Absender oder die Masterstation zurückgeben kann.

Der Vorteil des erfindungsgemässen hierarchischen Token-Passing-Prinzips liegt darin, dass ein entsprechend geführtes Netzleitsystem flexibel ist und robust gegen Störungen, welche den Datenaustausch vorübergehend vollständig zum Erliegen bringen.

Vorzugsweise wird zur Vermeidung von Kollisionen beim Normaldatenverkehr die Sendeerlaubnis nur an genau einen Empfänger weitergegeben. Zur Auflösung von Kollisionen bei Spezialaufrufen wird ein ursprünglich adressierter Empfängerbereich in mehrere Teilbereiche aufgeteilt und die Sendeerlaubnis nacheinander an die einzelnen Teilbereiche abgetreten.

Um der zeitlich und örtlich variierenden Uebertragungseigenschaften des Datenkanals Rechnung zu tragen, zeichnet sich eine besonders bevorzugte Ausführungsform dadurch aus,
a) dass die eine Teilnehmerstation bzw. zumindest eine der mehreren Teilnehmerstationen bei ihr empfangbare Telegramme und jeweils eine Grösse zum Bestimmen einer Uebertragungsqualität registriert,
b) dass die registrierende Teilnehmerstation die registrierten Uebertragungsqualitäten der Masterstation mitteilt,
c) dass die Masterstation aufgrund der ihr mitgeteilten Uebertragungsqualitäten für die registrierende Teilnehmerstation mindestens ein Datenrouting festlegt,
d) und dass Telegramme, welche für die registrierende Teilnehmerstation bestimmt sind, gemäss dem festgelegten Datenrouting übermittelt werden.

Wie bereits erwähnt, wird die Erfindung vorzugsweise für ein leittechnisches System auf Nieder- und/oder Mittelspannungsebene verwendet.

Weitere vorteilhafte Ausführungsformen ergeben sich aus den abhängigen Patentansprüchen.

### Kurze Beschreibung der Zeichnung

Nachfolgend soll die Erfindung anhand von Ausführungsbeispielen im Zusammenhang mit der Zeichnung näher erläutert werden. Es zeigen:
- Fig. 1: ein Netzwerk mit einer Masterstation, mehreren Teilnehmerstationen und einem Energieversorgungsnetz als gemeinsamem Datenkanal;
- Fig. 2a,b: eine Darstellung des zeitlichen Ablaufs des erfindungsgemässen hierarchischen Token-Passing-Prinzips;
- Fig. 3: eine Darstellung des Verfahrens zur Auflösung von Kollisionen; und
- Fig. 4: eine logische Verbindungsstruktur in einem Netzwerk mit einer Masterstation und vier Teilnehmerstationen.

Die in der Zeichnung verwendeten Bezugszeichen und deren Bedeutung sind in der Bezeichnungsliste zusammenfassend tabelliert. Grundsätzlich werden für gleiche Teile gleiche Bezugszeichen verwendet.

### Wege zur Ausführung der Erfindung

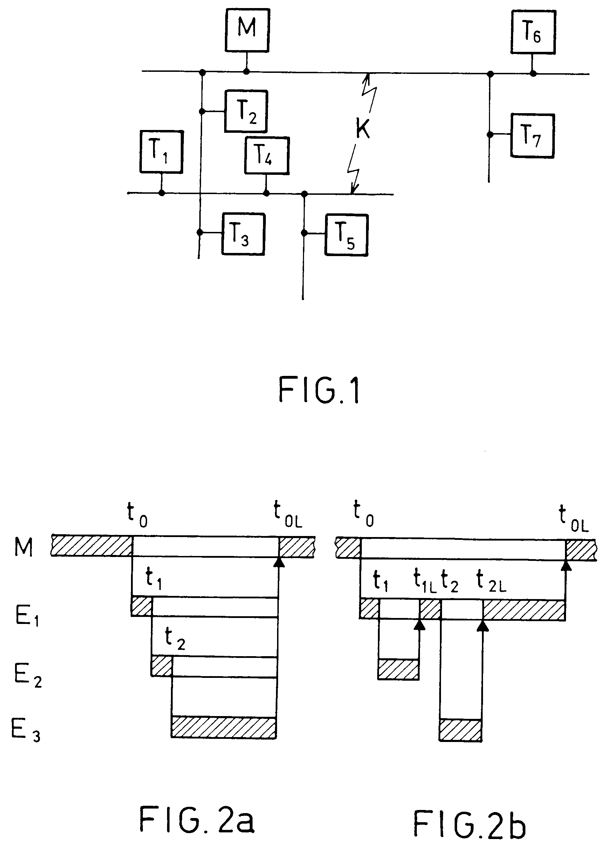

Fig. 1 zeigt ein Netzwerk mit einer Masterstation M und mehreren Teilnehmerstationen T1,..,T7, welche durch einen gemeinsamen Datenkanal K miteinander verbunden sind. Die Masterstation M kontrolliert den Datenaustausch im Netzwerk. Sie gibt Befehle aus und fordert Daten an.

Vorzugsweise wird als Datenkanal ein elektrisches Verteilnetz auf Nieder- und/oder Mittelspannungsebene verwendet. Die Masterstation M und die Teilnehmerstationen T1,..,T7 sind z.B. Sender/Empfängerstationen, welche bei Schaltanlagen und Verbrauchern an die elektrischen Leitungen angekoppelt sind und welche zum Senden und Empfangen von FH/PSK-Signalen (FH = frequency hopping; PSK = phase shift keying) geeignet sind. Es ist dabei nicht nötig, dass alle Stationen auf der gleichen Spannungsebene lokalisiert sind. Ein System, welches sich über beide genannten Spannungsebenen erstreckt ist beispielsweise der eingangs zitierten EP-0,231,457 zu entnehmen. Für Einzelheiten bezüglich Signalübertragung mit FH/PSK-Signalen wird auf die ebenfalls eingangs zitierten veröffentlichten Patentanmeldungen verwiesen.

Das erfindungsgemässe Verfahren hat zum Ziel, einen zuverlässig funktionierenden, geregelten Datenaustausch zu ermöglichen. Dies wird mit einem nachfolgend beschriebenen, hierarchischen Token-Passing-Prinzip mit geregelt zugeteilter Sendeerlaubnis erreicht.

Die Figuren 2a und 2b veranschaulichen den zeitlichen Ablauf des Verfahrens. Zu Beginn jedes Datenaustausches liegt die Sendeerlaubnis (angedeutet durch eine Schraffur) ausschliesslich bei der Masterstation M.

In Fig. 2a sendet die Masterstation M zum Zeitpunkt t0 ein Telegramm (d.h. ein Datenpaket mit einem Adresskopf, enthaltend Zwischen- und/oder Endadressaten, sowie Zeitlimits, Befehle etc.) mit einem Zeitlimit t0L an einen ersten Empfänger E1 (Teilnehmerstation) und übergibt diesem gleichzeitig die Sendeerlaubnis.

Der Empfänger E1 kann nun bis zum Ablauf des ihm vorgegebenen Zeitlimits t0L frei über den Datenkanal verfügen, um den im Telegramm enthaltenen Befehl auszuführen.

Im vorliegenden Beispiel sendet er zum Zeitpunkt t1 selbst ein Telegramm mit dem vorgegebenen Zeitlimit t0L an einen untergeordneten zweiten Empfänger E2 ab und überlässt diesem gleichzeitig die Sendeerlaubnis. Auf die selbe Weise geht die Sendeerlaubnis an einen dem zweiten Empfänger E2 untergeordneten, weiteren, dritten Empfänger E3 über, welcher dann den ganzen, ihm zur Verfügung stehenden, restlichen Zeitraum für sich beansprucht.

Nach Ablauf des Zeitlimits t0L fällt die Sendeerlaubnis wieder an die Masterstation M zurück.

Fig. 2b zeigt einen anderen, ebenfalls möglichen Ablauf. Wiederum hat die Masterstation M zu Beginn als einzige die Sendeerlaubnis inne. Unter Vorgabe eines Zeitlimits t0L überlässt sie diese dem ersten Empfänger E1. Dieser setzt nun selbst ein weiteres Zeitlimit t1L fest und gibt die Sendeerlaubnis unter dieser Vorgabe an den untergeordneten, zweiten Empfänger E2 ab.

Das weitere Zeitlimit t1L darf dabei das dem ersten Empfänger E1 selbst vorgegebene Zeitlimit t0L nicht überschreiten. Im vorliegenden Beispiel ist sie so bemessen, dass dieser nach Ablauf des von ihm vorgegebenen Zeitlimits t1L ein weiteres Telegramm mit einem weiteren Zeitlimit t2L an einen dritten Empfänger E3 absenden kann.

Nachdem die Sendeerlaubnis vom dritten an den ersten Empfänger zurückgefallen ist, lässt dieser den ihm verbliebenen Zeitraum einfach verstreichen. Zum Zeitpunkt t0L hat die Masterstation wieder als einzige die Kontrolle über den Kanal. Der Datenaustausch ist abgeschlossen.

In den beiden Beispielen ist der Datenaustausch strikt geregelt. Die Sendeerlaubnis ist stets bei genau einer Teilnehmerstation (resp. bei der Masterstation), und nur wer die Sendeerlaubnis innehat, darf Telegramme absenden. Alle andern hören zu. Dadurch ist gewährleistet, dass auf dem gemeinsamen Datenkanal keine Kollisionen auftreten. Ein derart geregelter Datenaustausch wird Normaldatenverkehr genannt.

Neben dem Normaldatenverkehr existieren aber auch noch sogenannte Spezialaufrufe. Bei diesen ist die Sendeerlaubnis nicht mehr auf einen Empfänger beschränkt. Es kann deshalb vorkommen, dass zwei oder mehrere Telegramme, welche von verschiedenen Teilnehmerstationen gleichzeitig auf den Datenkanal gegeben werden, miteinander kollidieren.

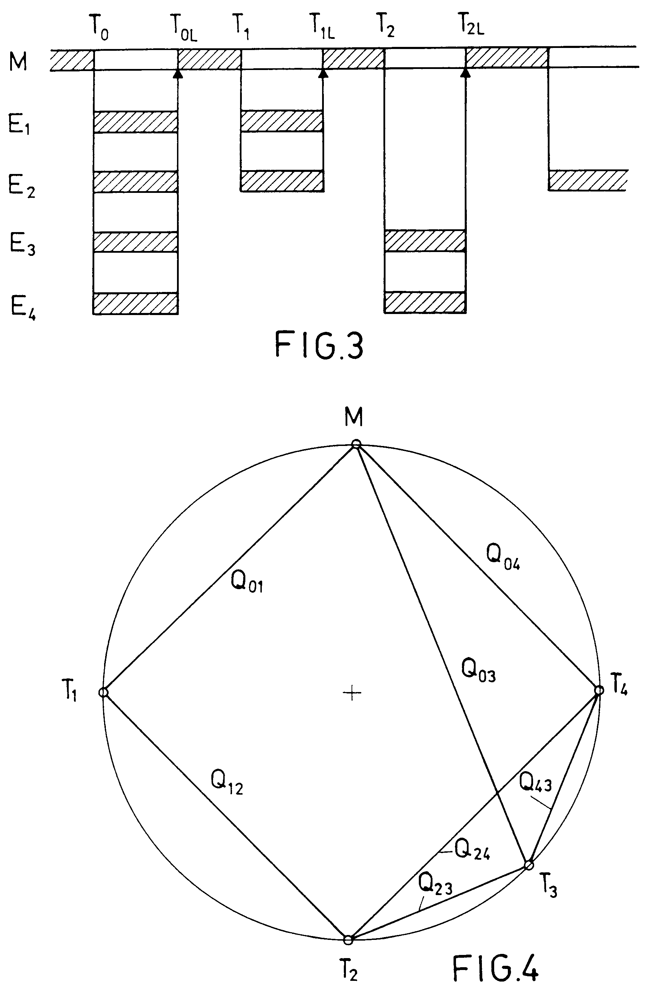

Anhand von Fig. 3 wird nun erläutert, wie solche Kollisionen aufgelöst werden. Zum Zeitpunkt t0 versendet die Masterstation M einen Spezialaufruf, d.h. ein Telegramm mit einem Zeitlimit t0L, welches an einen ganzen Empfängerbereich E1,..,E4 adressiert ist. Wenn nun die beiden Empfänger E2 und E3 gleichzeitig antworten, dann überlagern sich die entsprechenden Telegramme und sind nicht mehr entzifferbar.

Im allgemeinen wird die Masterstation M weder festellen können wieviele Empfänger, noch welche Empfänger geantwortet haben. Sie teilt deshalb den ursprünglichen Empfängerbereich E1,..,E4 in einen ersten und einen zweiten Teilbereich E1,E2 resp. E3,E4 auf. Dann wiederholt sie das Telegramm separat für jeden Teilbereiche.

Im vorliegenden Beispiel ist damit die Kollision aufgelöst. Nun kann die Masterstation die Empfänger E2, E3, welche auf den Spezialaufruf geantwortet haben, im Normaldatenverkehr bedienen.

Falls nach einem ersten Aufteilen des Empfängerbereichs in einem Teilbereich erneut Kollisionen auftreten, wird der Teilbereich selbst wieder aufgeteilt. Auf diese Weise können mehrfache Kollisionen sukzessive entflochten werden.

Vorzugsweise wird der Spezialaufruf wiederholt, nachdem die Teilnehmerstationen, deren Antwort registriert worden ist, bedient worden sind. Damit kann sichergestellt werden, dass eine schwach empfangbare Teilnehmerstation nicht überhört wird. Es ist nämlich durchaus möglich, dass eine Kollision zwischen einem Telegramm mit einer grossen Signalstärke und einem solchen mit einer geringen Signalstärke gar nicht als solche erkannt wird.

Die beschriebenen Spezialaufrufe eignen sich z.B. für die Alarmabfrage und für das Einbinden von neuen Teilnehmerstationen.

Es ist durchaus im Sinne der Erfindung, wenn die Masterstation Spezialaufrufe delegiert. In Fig. 3 tritt dann irgendeine Teilnehmerstation an Stelle der Masterstation. Während aber der Masterstation beliebig viel Zeit zum Auflösen von allfälligen Kollisionen zur Verfügung steht, ist der stellvertretenden Teilnehmerstation natürlich ein Zeitlimit vorgegeben.

Das bisher Gesagte lässt sich wie folgt zusammenfassen:
1. Die Masterstation hat die vollständige Kontrolle über den Datenkanal. Sie kann letztere für eine von ihr bestimmte Zeitdauer abtreten. Nach deren Ablauf liegt die Kontrolle wieder ausschliesslich bei der Masterstation.
2. Jede Teilnehmerstation, die die Sendeerlaubnis erhält, kann innerhalb der ihr vorgegebenen Zeitdauer frei über den Datenkanal verfügen. Insbesondere darf sie die Sendeerlaubnis als Absender an eine andere Teilnehmerstation abtreten.

Dadurch ist eine hierarchische Struktur definiert. Auf jeder Ebene der Hierarchie bestehen folgende Möglichkeiten:
a) Der Empfänger registriert das Telegramm und lässt das vorgegebene Zeitlimit verstreichen, ohne von der Sendeerlaubnis Gebrauch zu machen.
b) Der Empfänger macht von der Sendeerlaubnis Gebrauch, tritt sie aber nicht ab.
c) Der Empfänger macht von der Sendeerlaubnis Gebrauch und tritt sie für einen von ihm bestimmten Zeitraum, der das dem Empfänger selbst vorgegeben Zeitlimit nicht überschreiten darf, an einen untergeordneten weiteren Empfänger ab.
d) Der Empfänger gibt die Sendeerlaubnis, evtl. zusammen mit irgendwelchen Daten (Anfragen, Informationen) an die Masterstation zurück.

Eine Teilnehmerstation ist natürlich nicht auf den Normaldatenverkehr beschränkt. Sie kann durchaus auch Spezialaufrufe aussenden. Ein Beispiel dafür wäre das Suchen von neuen Teilnehmerstationen in einem von der Masterstation entfernten Bereich des Netzwerks. In Fig. 3 tritt dann eine mit einem hinreichend grossen Zeitlimit versehene Teilnehmerstation anstelle der Masterstation.

Im folgenden werden nun bevorzugte Ausführungsformen der Erfindung beschrieben. Dabei geht es darum, die Uebermittlung von Datenpaketen so durchzuführen, dass sie der Charakteristik des Datenkanals möglichst gut angepasst ist.

Fig. 4 zeigt ein Beispiel einer logischen Verbindungsstruktur in einem Netzwerk mit einer Masterstation M und vier Teilnehmerstationen T1,..,T4. Jede eingezeichnete Linie stellt eine mögliche, direkte Verbindung dar.

Im vorliegenden Beispiel kann die Masterstation M mit den drei Teilnehmerstationen T1, T3, T4 direkt in Kontakt treten. Zur Teilnehmerstation T2 hingegen existiert keine direkte Verbindung. Da diese Teilnehmerstation T2 jedoch mit allen übrigen Teilnehmerstationen T1, T3, T4 direkt in Verbindung steht, hat die Masterstation die Möglichkeit, eine der drei Teilnehmerstationen T1, T3, T4 als Relais zu benützen und so eine indirekte Verbindung aufzubauen.

Jede direkte Verbindung wird in weiterer Ausgestaltung der Erfindung durch ihre Uebertragungsqualität Qij gekennzeichnet. Eine Verbindung muss eine minimale Uebertragungsqualität aufweisen, damit sie als solche in die logische Verbindungsstruktur aufgenommen wird.

Aufgrund der im Netzwerk herrschenden Uebertragungsqualitäten Qij ermittelt die Masterstation für jede Teilnehmerstation zumindest ein Datenrouting. Dieses Datenrouting legt fest, welche Teilnehmerstationen (falls überhaupt) bei der Uebermittlung eines Datenpakets als Relais zu benützen sind.

Im vorliegenden Beispiel läuft die Uebermittlung zwischen Masterstation M und einer der drei Teilnehmerstationen T1, T3, T4 direkt, diejenige zwischen Masterstation M und Teilnehmerstation T2 z.B. über die Teilnehmerstation T3 ab. Ein alternatives Datenrouting könnte beispielsweise über die Teilnehmerstation T3 laufen.

Die Uebertragungsqualität wird von jeder Teilnehmerstation laufend überwacht. Falls sie das gegebene Kriterium nicht mehr erfüllt, wird dies der Masterstation mitgeteilt.

Gemäss einer bevorzugten Ausführungsform hört zu diesem Zweck jede Teilnehmerstation den bei ihr empfangbaren Datenverkehr ab, registriert den Absender und als Uebertragungsqualität das Verhältnis von Signal-zu-Rauschen eines Datenpakets und teilt die entsprechenden Grössen zum gegebenen Zeitpunkt der Masterstation mit.

Alternativ oder ergänzend kann die Masterstation ihrerseits jedes Datenrouting durch ein Qualitätsmerkmal überwachen. Wenn das Qualitätsmerkmal ein gegebenes Kriterium nicht mehr erfüllt, ermittelt die Masterstation unter Berücksichtigung der von den Teilnehmerstationen registrierten Uebertragungqualitäten ein neues Datenrouting.

Eine als Qualitätsmerkmal geeignete Grösse ist die mittlere Anzahl störungsbedingter Wiederholungen eines Datenpakets. Als Kriterium könnte dann eine maximale Zahl von Wiederholungen innerhalb der z.B. letzten hundert, an eine bestimmte Teilnehmerstation übermittelten Datenpakete verwendet werden. Eine weitere Grösse ist z.B. der Rauschabstand der empfangenen Telegramme.

Selbstverständlich können für das Qualitätsmerkmal auch mehreren Grössen geeignet kombiniert und gewichtet werden.

Die weitere Ausgestaltung der Erfindung wird somit durch folgende Verfahrenschritte charakterisiert:
a) Abhören des laufenden Datenverkehrs und Registrieren der Uebertragungsqualität zur Masterstation und zu den Teilnehmerstationen;
b) Mitteilen der registrierten Uebertragungsqualitäten an die Masterstation;
c) Ermitteln eines oder mehrerer Datenroutings für jede Teilnehmerstation;
d) Uebermitteln von Datenpaketen gemäss dem Datenrouting.

Das Verfahren lässt sich mit Vorteil zum Einbinden von neuen Teilnehmerstationen in das bestehende Netzwerk verwenden. Dies wird im folgenden anhand von Fig. 4 erläutert.

In einem ersten Beispiel sei die Teilnehmerstation T3 neu. Die Masterstation kennt also nur die drei Teilnehmerstationen T1, T2, T4 und tauscht nur mit diesen Datenpakete aus. Die neue Teilnehmerstation T3 hört den laufenden Datenverkehr aber ab und registriert, mit welchen Uebertragungsqualitäten Q03, Q13, Q23, Q43 sie die Masterstation M resp. die Teilnehmerstationen T1, T2, T4 empfängt.

Zu bestimmten, regelmässigen oder unregelmässigen Zeitpunkten prüft die Masterstation M, ob neue Teilnehmerstationen ins bestehende Netzwerk einzubinden sind. Zu diesem Zweck macht sie einen Spezialaufruf, welcher sich an alle nicht eingebundenen Teilnehmerstationen richtet.

Mit dem entsprechenden Datenpaket wird ein Qualitätsmerkmal übermittelt, welches die zwischen Masterstation und neuer Teilnehmerstation liegende Verbindung qualifiziert. Eine mögliche Ausführungsform besteht dabei darin, dass das Qualitätsmerkmal die Uebertragungsqualität der Verbindung charakterisiert, welche zwischen Masterstation und derjenigen Teilnehmerstation herrscht, welche stellvertretend für die Masterstation den Spezialaufruf in einem entlegenen Teil des Netzwerkes durchführt.

Falls das übermittelte Qualitätsmerkmal ein gegebenes Kriterium erfüllt, antwortet die neue Teilnehmerstation auf den Spezialaufruf und teilt der Masterstation M die registrierten Uebertragungsqualitäten Q03, Q13, Q23, Q43 mit.

Die Masterstation M integriert die neue Teilnehmerstation T3 in die logische Verbindungsstruktur, indem sie basierend auf den Uebertragungsqualitäten Q03, Q13, Q23, Q43 zumindest ein Datenrouting festlegt. Damit ist der Vorgang abgeschlossen.

Falls ein Spezialaufruf des Masterstation unbeantwortet bleibt, gibt es neben dem trivialen Fall, dass eben keine neue Teilnehmerstation einzubinden ist, zwei Möglichkeiten:
1. Das Qualitätsmerkmal erfüllt das gegebene Kriterium nicht, oder
2. die neue Teilnehmerstation hat den Spezialaufruf nicht hören können.

Um diese beiden Fälle behandeln zu können, muss die Masterstation den Spezialaufruf an eine Teilnehmerstation delegieren. Bei einem delegierten Spezialaufruf beinhaltet das Qualitätsmerkmal die Uebertragungsqualität zwischen Masterstation und stellvertretender Teilnehmerstation.

Wenn beispielsweise in Fig. 4 die Teilnehmerstation T2 einzubinden ist, so muss die Masterstation den Spezialaufruf z.B. an die Teilnehmerstation T3 delegieren. Das Qualitätsmerkmal beinhaltet dann die Uebertragungsqualität Q03 der entsprechenden Verbindung. Beim Ueberprüfen des Qualitätsmerkmals kann die neue Teilnehmerstation T2 insbesondere auch die von ihr registrierte Uebertragungsqualität Q23 miteinbeziehen.

Im bestehenden Netzwerk wird jede Teilnehmerstation durch eine kurze Netzwerkadresse identifiziert. Da eine neue Teilnehmerstation noch keine solche hat, antwortet sie auf einen Spezialaufruf vorzugsweise mit einer global einmaligen, und damit entsprechend langen Seriennummer. Sobald sie dann eine Netzwerkadresse hat, beachtet sie die in regelmässigen oder unregelmässigen Zeitabständen ausgesandten Spezialaufrufe zum Einbinden nicht mehr.

Abschliessend kann gesagt werden, dass die Erfindung ein flexibles Verfahren zum effizienten Uebermitteln von Datenpaketen schafft, welches sich besonders für leittechnische Systeme auf Nieder- und/oder Mittelspannungsnetzen eignet.

### BEZEICHNUNGSLISTE

- M: Masterstation
- T1,T2,T3,T4: Teilnehmerstation
- K: Datenkanal
- Q01,Q02,..: Uebertragungsqualität

## Patentansprüche

1. Verfahren zum Austauschen von Daten in Form von Telegrammen in einem Netzwerk mit einer Masterstation, einer oder mehreren Teilnehmerstationen und einem gemeinsamen Datenkanal nach einem hierarchischen Token-Passing-Prinzip mit einer geregelt zugeteilten Sendeerlaubnis, bei welchem Verfahren
a) zu Beginn eines Datenaustausches die Sendeerlaubnis ausschliesslich bei der Masterstation liegt,
b) die Masterstation zum Auslösen des Datenaustausches ein Telegramm mit einem von ihr vorgegebenen Zeitlimit an die eine bzw. an wenigstens eine der mehreren Teilnehmerstationen als ersten Empfänger sendet,
c) die angesprochene Teilnehmerstation für einen durch das Zeitlimit beschränkten Zeitraum die Sendeerlaubnis übernimmt, und als Absender die Sendeerlaubnis mit einem Telegramm und einem das vorgegebene Zeitlimit nicht überschreitenden weiteren Zeitlimit ggf. an eine untergeordnete weitere Teilnehmerstation als zweiten Empfänger übergeben kann, welcher seinerseits dieselben Möglichkeiten hat wie der erste Empfänger, und
d) die Masterstation nach Ablauf des von ihr vorgegebenen Zeitlimits die Sendeerlaubnis wieder ausschliesslich übernimmt,
dadurch gekennzeichnet, dass
e) jeder der Empfänger wahlweise auch das vorgegebene Zeitlimit verstreichen lassen kann, ohne die Sendeerlaubnis abzutreten, oder die Sendeerlaubnis an den Absender oder die Masterstation zurückgeben kann.

2. Verfahren nach Anspruch 1, dadurch gekennzeichnet, dass zur Vermeidung von Kollisionen während eines Normaldatenverkehrs die Sendeerlaubnis nur an genau einen Empfänger weitergegeben wird und dass zur Auflösung von Kollisionen während eines Spezialaufrufes ein ursprünglicher Empfängerbereich in mehrere Teilbereiche aufgeteilt wird und die Sendeerlaubnis nacheinander an die einzelnen Teilbereiche des Empfängerbereichs abgetreten wird.

3. Verfahren nach Anspruch 1, dadurch gekennzeichnet, dass Spezialaufrufe zum Einbinden von neuen Teilnehmerstationen in das Netzwerk und für eine Alarmabfrage verwendet werden.

4. Verfahren nach Anspruch 2, dadurch gekennzeichnet, dass der ursprüngliche Empfängerbereich in zwei Teilbereiche aufgeteilt wird.

5. Verfahren nach Anspruch 3, dadurch gekennzeichnet, dass beim Einbinden die neuen Teilnehmerstationen durch eine global eindeutige Seriennummer identifiziert werden, und dass beim Aufteilen des ursprünglichen Empfängerbereichs ein Bereich von adressierten Seriennummern aufgeteilt wird.

6. Verfahren nach Anspruch 1, dadurch gekennzeichnet,
a) dass die eine Teilnehmerstation bzw. zumindest eine der mehreren Teilnehmerstationen bei ihr empfangbare Telegramme und jeweils eine Grösse zum Bestimmen einer Uebertragungsqualität registriert,
b) dass die registrierende Teilnehmerstation die registrierten Uebertragungsqualitäten der Masterstation mitteilt,
c) dass die Masterstation aufgrund der ihr mitgeteilten Uebertragungsqualitäten für die registrierende Teilnehmerstation mindestens ein Datenrouting festlegt,
d) und dass Telegramme, welche für die registrierende Teilnehmerstation bestimmt sind, gemäss dem festgelegten Datenrouting übermittelt werden.

7. Verfahren nach Anspruch 6, dadurch gekennzeichnet, dass
a) eine neu ins Netzwerk einzubindende Teilnehmerstation in einem uneingebundenen Zustand bei ihr empfangbare Telegramme und jeweils eine Grösse zum Kennzeichnen einer Uebertragungsqualität dieser Telegramme registriert,
b) zum Einbinden der neuen Teilnehmerstation die Masterstation einen Spezialaufruf absendet, welcher ein Qualitätsmerkmal für die zwischen Masterstation und neuer Teilnehmerstation liegende Verbindung beinhaltet, und
c) dass diese neue Teilnehmerstation auf den Spezialaufruf nur dann antwortet und die registrierten Uebertragungsqualitäten der Masterstation nur dann mitteilt, wenn das Qualitätsmerkmal ein gegebenes Kriterium erfüllt.

8. Verfahren nach Anspruch 6, dadurch gekennzeichnet, dass die Masterstation die Uebertragungsqualität von Zeit zu Zeit überprüft.

9. Verfahren nach Anspruch 8, dadurch gekennzeichnet, dass die Uebertragungsqualität anhand einer mittleren Anzahl von störungsbedingten Wiederholungen überprüft wird.

10. Verfahren nach Anspruch 1, dadurch gekennzeichnet, dass als gemeinsamer Datenkanal die Leitungen eines elektrischen Energieverteilungsnetzes auf der Nieder- und Mittelspannungsebene verwendet werden und dass für den Datenaustausch FH/PSK-Signale eingesetzt werden.

## Claims

1. Method for exchanging data in the form of telegrams in a network with a master station, one or more subscriber stations and a common data channel in accordance with a hierarchic token passing principle with a controlled allocated send authorization, in which
a) at the start of a data exchange the send authoriza tion is exclusively at the master station,
b) the master station for the purpose of initiating a data exchange sends a telegram with a time limit given by it to the one or at least one of the several subscriber stations as the first recipient,
c) the addressed subscriber station accepts the send authorization for a time period limited by the time limit and as the sender can transfer the send authorization with a telegram and with a further time limit not exceeding the predetermined time limit optionally to a further, slave subscriber station as the second recipient, which in turn has the same possibilities as the first recipient and
d) at the end of the time limits which it has given, the master station again exclusively accepts the send authorization,
characterized in that
e) each of the recipients can selectively allow the predetermined time limit to elapse, without surrendering the send authorization, or can return the send authorization to the sender or to the master station.

2. Method according to claim 1, characterized in that for avoiding collisions during normal data traffic, the send authorization is only transferred to precisely one recipient and that for resolving collisions during a special call an original recipient zone is subdivided into several partial zones and the send authorization is successively surrendered to the individual partial zones of the recipient zone.

3. Method according to claim 1, characterized in that special calls for taking in new subscriber stations are used in the network and for an alarm interrogation.

4. Method according to claim 2, characterized in that the original recipient zone is subdivided into two partial zones.

5. Method according to claim 3, characterized in that on taking in the new subscriber stations are identified by a clear, overall serial number and that on subdividing the original recipient zone there is a subdivision of one range of addressed serial numbers.

6. Method according to claim 1, characterized in that
a) one subscriber station or at least one of the several subscriber stations records telegrams which it can receive and in each case a quantity for determining a transmission quality,
b) the recording subscriber station communicates the recorded transmission qualities to the master station,
c) as a result of the transmission qualities for the recording subscriber station communicated to it fixes at least one data routing,
d) and telegrams intended for the recording subscriber station are transferred in accordance with the fixed data routing.

7. Method according to claim 6, characterized in that
a) a new subscriber station to be taken into the network records in a non-taken in state telegrams which it can receive and in each case a quantity for characterizing a transmission quality of said telegrams,
b) for taking in the new subscriber station the master station emits a special call, which contains a quality feature for the link between the master station and the new subscriber station and
c) the new subscriber station only answers to the special call and only communicates the recorded transmission qualities to the master station if the quality feature fulfils a given criterion.

8. Method according to claim 6, characterized in that the master station checks the transmission quality every so often.

9. Method according to claim 8, characterized in that the transmission quality is checked by means of an average number of interference-caused repeats.

10. Method according to claim 1, characterized in that as the common data channel use is made of the lines of an electric power system on the low and medium voltage plane and that FH/PSK signals are used for the data exchange.

## Revendications

1. Procédé pour échanger des données sous la forme de télégrammes, dans un réseau comprenant une station principale, un ou plusieurs postes de réseau et une voie de données commune, selon un principe hiérarchique de passage à jeton et avec une autorisation d'émettre attribuée de manière réglementée, dans lequel
a) au début d'un échange de données, seule la station principale dispose de l'autorisation d'émettre,
b) pour le lancement de l'échange de données, la station principale envoie un télégramme au poste du réseau ou au moins à l'un des postes du réseau, qui est ainsi le premier récepteur, dans une limite de temps donnée par elle,
c) le poste du réseau contacté reprend l'autorisation d'émettre pour un temps d'une durée définie par la limite de temps, et peut alors, le cas échéant, comme émetteur, transmettre, avec un télégramme et une nouvelle limite de temps ne dépassant pas la limite de temps donnée, l'autorisation d'émettre à un second poste du réseau subordonné, qui devient alors le second récepteur et dispose ainsi des mêmes possibilités que le premier récepteur, et
d) la station principale, lorsque que la limite de temps donnée par elle est atteinte, reprend, de manière exclusive, l'autorisation d'émettre,
**caractérisé en ce que**
e) chaque récepteur peut, au choix, laisser s'écouler le temps limité donné, sans céder l'autorisation d'émettre, ou redonner cette autorisation à l'émetteur ou à la station principale.

2. Procédé selon la revendication 1, **caractérisé en ce** **qu'**afin d'éviter des collisions pendant un trafic normal de données, l'autorisation d'émettre n'est cédée qu'à un seul récepteur et **en ce qu'**afin de démanteler les collisions pendant une invitation à émettre spéciale, un domaine de réception de départ est divisé en plusieurs sous-domaines, qui se verront attribuer l'autorisation d'émettre l'un après l'autre.

3. Procédé selon la revendication 1, **caractérisé en ce** **qu'**on utilise les invitations à émettre spéciales pour l'intégration des nouveaux postes dans le réseau et pour une interrogation d'alarme.

4. Procédé selon la revendication 2, **caractérisé en ce** **que** le domaine de réception de départ est divisé en deux sous-domaines.

5. Procédé selon la revendication 3, **caractérisé en ce** **que**, lors de l'intégration, les nouveaux postes de réseau sont identifiés par un numéro de série globalement univoque et **que**, lors de la division du domaine de réception de départ, on divise un domaine de numéros de série adressés.

6. Procédé selon la revendication 1, **caractérisé en ce** **que,**
a) le poste de réseau ou tout au moins, un des plusieurs postes du réseau enregistre les télégrammes qu'il peut recevoir et une grandeur respective pour définir la qualité de transmission,
b) le poste ayant enregistré, communique les qualités de transmission à la station principale,
c) la station principale calcule au moins un acheminement de données pour le poste ayant enregistré, sur la base des qualités de transmission qu'il lui a communiquées, et
d) les télégrammes, destinés au poste ayant enregistré, sont transmis selon l'acheminement de données déterminé.

7. Procédé selon la revendication 6, **caractérisé en ce** **que**
a) un poste à intégrer dans le réseau, enregistre, avant son intégration, les télégrammes qu'il peut recevoir ainsi qu'une grandeur respective pour caractériser une qualité de transmission de ces télégrammes,
b) pour intégrer les nouveaux postes, la station principale lance une invitation à émettre spéciale contenant une caractéristique de qualité pour la liaison existant entre la station principale et un nouveau poste du réseau, et
c) ce nouveau poste du réseau ne répond à l'invitation à émettre spéciale et ne communique les qualités de transmission à la station principale, que si la caractéristique de qualité satisfait à un critère donné.

8. Procédé selon la revendication 6, **caractérisé en ce** **que** la station principale vérifie, de temps en temps, la qualité de transmission.

9. Procédé selon la revendication 8, **caractérisé en ce** **que** la qualité de transmission est vérifiée sur la base d'une quantité moyenne de répétitions dûes à des perturbations.

10. Procédé selon la revendication 1, **caractérisé en ce** **que** les lignes d'un réseau électrique de distribution d'énergie à basse et moyenne tension, sont utilisées comme voie de données commune et **en** **ce qu'**on peut se servir de signaux FH/MDP pour l'échange de données.
